# EUROPEAN PATENT APPLICATION

(11) **EP 4 835 020 A1**
(43) Date of publication of application: **04.11.2026**
(21) Application number: 24912363.9
(22) Date of filing: 11.12.2024
(51) Int. Cl.: C09D 13/00

(54) **SOLID WRITING IMPLEMENT**

(30) Priority: 27.12.2023 JP 2023220419
(71) Applicant: Kabushiki Kaisha Pilot Corporation (also trading as Pilot Corporation), Tokyo 104-8304 (JP)
(72) Inventor: KOBAYASHI, Masao, Tokyo 104-8304 (JP)
(74) Representative: Hoffmann Eitle
(86) International application number: PCT/JP2024/043726
(87) International publication number: WO 2025/142474

(57) **Abstract**

A solid writing body includes a leuco dye, a long-chain fatty acid ester, and a solvent capable of dissolving or dispersing the leuco dye.

## Description

### TECHNICAL FIELD

The present invention relates to a solid writing body.

### BACKGROUND ART

A solid writing body containing a leuco dye, which is an electron-donating dye, is known in which, by writing on a paper surface coated with a color developer, which is an electron acceptor, the leuco dye contained in a handwriting develops color such that the handwriting develops a color tone different from that of the solid writing body (for example, refer to Patent Document 1 and the like).

Patent Document 1 discloses an inorganic writing instrument containing an electron-donating color dye, a high boiling point solvent, and a polyethylene wax.

### CITATION LIST

### Patent Literature

Patent Document 1: Japanese Patent Application Laid-open No. H01-72391

### SUMMARY OF INVENTION

### PROBLEM TO BE SOLVED BY THE INVENTION

However, in the solid writing body of the related art, the color development of handwriting is not sufficient, and there has been room for improvement in achieving both improvement in the color developability of the handwriting and improvement in the temporal stability of the solid writing body.

An object of the present invention is to provide a solid writing body capable of achieving both improvement in color developability of a handwriting and improvement in temporal stability of the solid writing body.

### MEANS FOR SOLVING PROBLEM

In order to solve the above problem, the present invention is
1. A solid writing body including: a leuco dye; a long-chain fatty acid ester; and a solvent capable of dissolving or dispersing the leuco dye.
2. The solid writing body according to item 1, in which
   the long-chain fatty acid ester is an ester of a long-chain fatty acid and an alcohol,
   a number of carbon atoms in the long-chain fatty acid is 18 or more and 40 or less, and
   a number of carbon atoms in the alcohol is 18 or more and 40 or less.
3. The solid writing body according to item 1, in which
   the long-chain fatty acid ester is an ester of a long-chain fatty acid and an alcohol,
   a number of carbon atoms in the long-chain fatty acid is 20 or more and 26 or less, and
   a number of carbon atoms in the alcohol is 20 or more and 36 or less.
4. The solid writing body according to item 1, in which
   the long-chain fatty acid ester is an ester of a long-chain fatty acid and an alcohol, and
   is myricyl lignocerate in which a number of carbon atoms in the long-chain fatty acid is 24 and a number of carbon atoms in the alcohol is 30.
5. The solid writing body according to item 1, in which
   a content of the long-chain fatty acid ester is 5% by mass or more and 80% by mass or less based on a total amount of the solid writing body.
6. The solid writing body according to item 1, in which
   the long-chain fatty acid ester includes myricyl lignocerate in which a number of carbon atoms in the long-chain fatty acid is 24 and a number of carbon atoms in the alcohol is 30, and
   a content of the myricyl lignocerate is 30% by mass or more based on a total amount of the long-chain fatty acid ester.
7. The solid writing body according to item 1, in which
   the long-chain fatty acid ester includes myricyl lignocerate in which a number of carbon atoms in the long-chain fatty acid is 24 and a number of carbon atoms in the alcohol is 30, and
   a content of the myricyl lignocerate is 35% by mass or more based on a total amount of the long-chain fatty acid ester.
8. The solid writing body according to item 1, in which
   a ratio of a content of the leuco dye to a content of the long-chain fatty acid ester is in a range of 1:2 to 1:800, inclusive, in terms of mass ratio.

### EFFECT OF THE INVENTION

The present invention can achieve both the improvement in the color developability of the handwriting and the improvement in the temporal stability of the solid writing body.

### DESCRIPTION OF EMBODIMENTS

Hereinafter, embodiments of the present invention will be described in detail. In addition, in the present specification, "part", "%", "ratio" and the like indicating the formulation are on a mass basis unless otherwise specified.

### (Solid Writing Body)

The solid writing body of the present embodiment includes a leuco dye, a long-chain fatty acid ester, and a solvent capable of dissolving or dispersing the leuco dye.

The solid writing body of the present embodiment includes a leuco dye and a long-chain fatty acid ester as an excipient. Therefore, the solid writing body of the present embodiment can achieve both the improvement in the color developability of the handwriting and the improvement in the temporal stability of the solid writing body.

In addition, in the solid writing body of the present embodiment, by using the long-chain fatty acid ester as the excipient, it is possible to realize sufficient strength necessary for writing and improve heat resistance in addition to the above effects.

Hereinafter, each component constituting the solid writing body of the present embodiment will be described in detail.

### (Leuco Dye)

The leuco dye contained in the solid writing body of the present embodiment is not particularly limited as long as the leuco dye is a dye having electron-donating properties and functions as a color former.

For the solid writing body of the present embodiment, known leuco dyes can be used alone or in combination of two or more thereof. In the solid writing body of the present embodiment, in particular, a leuco compound of a dye such as a triphenylmethane-based dye, a fluorane-based dye, a phenothiazine-based dye, an auramine-based dye, a spiropyran-based dye, and an indolinophthalide-based dye is preferably used.

Specific examples of the leuco dye include 3,3-bis(p-dimethylaminophenyl)phthalide, 3,3-bis(p-dimethylaminophenyl)-6-dimethylaminophthalide (also known as crystal violet lactone), 3,3-bis(p-dimethylaminophenyl)-6-diethylaminophthalide, 3,3-bis(p-dimethylaminophenyl)-6-chlorophthalide, 3,3-bis(p-dibutylaminophenyl)phthalide, 3-(4-diethylamino-2-ethoxyphenyl)-3-(1-ethyl-2-methylindol-3-yl)-4-azaphthalide, 3-[4-(diethylamino)-2-hexyloxyphenyl]-3-(1-ethyl-2-methylindol-3-yl)-4-azaphthalide, 3-cyclohexylamino-6-chlorofluoran, 3-dimethylamino-5,7-dimethylfluoran, 3-diethylamino-7-chlorofluoran, 3-diethylamino-7-methylfluoran, 3-diethylamino-7,8-benzfluoran, 3-diethylamino-6-methyl-7-chlorofluoran, 3-(N-p-tolyl-N-ethylamino)-6-methyl-7-anilinofluoran, 3-pyrrolidino-6-methyl-7-anilinofluoran, 2-{N-(3'-trifluoromethylphenyl)amino}-6-diethylaminofluoran, 2-{3,6-bis(diethylamino)-9-(o-chloroanilino)xanthyl}benzoic acid lactam, 3-diethylamino-6-methyl-7-(m-trichloromethylanilino)fluoran, 3-diethylamino-7-(o-chloroanilino)fluoran, 3-di-n-butylamino-7-(o-chloroanilino)fluoran, 3-N-methyl-N, n-amylamino-6-methyl-7-anilinofluoran, 3-N-methyl-N-cyclohexylamino-6-methyl-7-anilinofluoran, 3-diethylamino-6-methyl-7-anilinofluoran, 3-(N,N-diethylamino)-5-methyl-7-(N,N-dibenzylamino)fluoran, benzoyl leucomethylene blue, 6'-chloro-8'-methoxy-benzindolino-spiropyran, 6'-bromo-3'-methoxy-benzindolino-spiropyran, 3-(2'-hydroxy-4'-dimethylaminophenyl)-3-(2'-methoxy-5'-chlorophenyl)phthalide, 3-(2'-hydroxy-4'-dimethylaminophenyl)-3-(2'-methoxy-5'-nitrophenyl)phthalide, 3-(2'-hydroxy-4'-diethylaminophenyl)-3-(2'-methoxy-5'-methylphenyl)phthalide, 3-(2'-methoxy-4'-dimethylaminophenyl)-3-(2'-hydroxy-4'-chloro-5'-methylphenyl)phthalide, 3-(N-ethyl-N-tetrahydrofurfuryl)amino-6-methyl-7-anilinofluoran, 3-N-ethyl-N-(2-ethoxypropyl)amino-6-methyl-7-anilinofluoran, 3-N-methyl-N-isobutyl-6-methyl-7-anilinofluoran, 3-morpholino-7-(N-propyl-trifluoromethylanilino)fluoran, 3-pyrrolidino-7-m-trifluoromethylanilinofluoran, 3-diethylamino-5-chloro-7-(N-benzyl-trifluoromethylanilino)fluoran, 3-pyrrolidino-7-(di-p-chlorophenyl)methylaminofluoran, 3-diethylamino-5-chloro-7-(α-phenylethylamino)fluoran, 3-(N-ethyl-p-toluidino)-7-(α-phenylethylamino)fluoran, 3-diethylamino-7-(o-methoxycarbonylphenylamino)fluoran, 3-diethylamino-5-methyl-7-(α-phenylethylamino)fluoran, 3-diethylamino-7-piperidinofluoran, 2-chloro-3-(N-methyltoluidino)-7-(p-n-butylanilino)fluoran, 3-(N-methyl-N-isopropylamino)-6-methyl-7-anilinofluoran, 3-di-n-butylamino-6-methyl-7-anilinofluoran, 3,6-bis(dimethylamino)fluorene spiro(9,3')-6'-dimethylaminophthalide, 3-(N-benzyl-N-cyclohexylamino)-5,6-benzo-7-α-naphthylamino-4'-bromofluoran, 3-diethylamino-6-chloro-7-anilinofluoran, 3-diethylamino-6-methyl-7-mesitydino-4', 5'-benzofluoran, 3-N-methyl-N-isopropyl-6-methyl-7-anilinofluoran, 3-N-ethyl-N-isoamyl-6-methyl-7-anilinofluoran, and 3-diethylamino-6-methyl-7-(2',4'-dimethylanilino)fluoran.

From the viewpoint of considering environmental aspects, among these, as the leuco dyes having higher safety, 3-diethylamino-6-methyl-7-anilinofluoran, 3-dibutylamino-6-methyl-7-anilinofluoran, 3-(N-cyclohexyl-N-methylamino)-6-methyl-7-anilinofluoran, 3-(N-ethyl-N-isopentylamino)-6-methyl-7-anilinofluoran, 3-N-di-n-pentylamino-6-methyl-7-anilinofluoran, 3-diethylamino-7-(3-trifluoromethylanilino)fluoran, 3-(N-ethyl-N-4-methylphenylamino)-6-methyl-7-anilinofluoran, 3-diethylamino-6-methyl-7-(3-methylanilino)fluoran, 3,3'-bis(dimethylaminophenyl)-6-dimethylaminophthalide, 3-(4-diethylamino-2-ethoxyphenyl)-3-(1-ethyl-2-methylindol-3-yl)-4-azaphthalide, 3-[4-(diethylamino)-2-hexyloxyphenyl]-3-(1-ethyl-2-methylindol-3-yl)-4-azaphthalide, 2-(N-phenyl-N-methylamino)-6-(N-p-tolyl-N-ethylamino)fluoran, 3,3-bis(1-n-butyl-2-methyl-indol-3-yl)phthalide, 1,3-dimethyl-6-diethylaminofluoran, 3-bromo-3-methyl-6-dibutylaminofluoran, and the like are preferably used.

The content of the leuco dye contained in the solid writing body of the present embodiment is preferably 0.1% by mass or more and 5% by mass or less, more preferably 0.3% by mass or more and 3% by mass or less, and still more preferably 0.5% by mass or more and 2% by mass or less based on the total amount of the solid writing body.

By containing the leuco dye in the above amount, the solid writing body of the present embodiment achieves excellent color developability of the handwriting.

### (Solvent)

The solid writing body of the present embodiment system includes a solvent capable of dissolving or dispersing the leuco dye.

The solvent capable of dissolving or dispersing the leuco dye used in the solid writing body of the present embodiment is not particularly limited as long as the solvent has a property capable of dissolving or dispersing the leuco dye without causing it to develop color and hardly evaporating at normal temperature. Considering that the color developability of the handwriting is improved, a solvent that dissolves the leuco dye is preferable.

Examples of the solvent satisfying the above conditions include at least one type selected from a high-boiling organic acid ester, a fatty acid ester, an aromatic hydrocarbon, a chlorinated polyphenyl, and a phosphoric acid ester. In addition, as the solvent, it is preferable to use an organic acid ester, a fatty acid ester, such as methyl acetylricinoleate, dibutyl phthalate, and butyl phthalyl glycolate, which do not have toxicity, and a high-boiling aromatic hydrocarbon.

The fatty acid ester used as a solvent is a fatty acid ester in which the number of carbon atoms in an alcohol is three or less. Examples of such fatty acid esters include methyl laurate, methyl oleate, isopropyl myristate, and isopropyl palmitate.

In addition, examples of the solvent include tri-fatty acid glycerides that are liquid under normal temperature and normal pressure (25°C, 1.013 × 10⁵ Pa) and have fatty acids with the number of carbon atoms of 10 or less, such as tricaprin, tricaprylin, and tri-2-ethylhexanoic acid glyceride; terpene oils such as dihydroterpinyl acetate, isobornyl acetate, and 3-methylbutane-1,3-diyne diacetate; and the like.

Further, from the viewpoint of well dissolving the leuco dye, an ester of salicylic acid, an ester of benzoic acid, benzyl alcohol, and the like may be used as a dissolution aid and may be used in combination with the solvent.

Specific examples of the solvent include, for example, as the fatty acid ester, RIC-CIZER C-88 (Itoh Oil Chemicals Co., Ltd) and RIC-CIZER S-4 (Itoh Oil Chemicals Co., Ltd), but the solvent is not limited thereto.

The content of the solvent contained in the solid writing body of the present embodiment may be any amount capable of dissolving or dispersing the leuco dye contained in the solid writing body, and may be appropriately adjusted according to the content of the leuco dye.

For example, the content of the solvent contained in the solid writing body is preferably 15% by mass or more and 60% by mass or less, more preferably 20% by mass or more and 50% by mass or less, and particularly preferably 25% by mass or more and 40% by mass or less based on the total amount of the solid writing body.

### (Long-Chain Fatty Acid Ester)

The long-chain fatty acid ester used in the solid writing body of the present embodiment is an ester of a long-chain fatty acid and an alcohol.

Preferably, the number of carbon atoms in the long-chain fatty acid is 18 or more and 40 or less, and the number of carbon atoms in the alcohol is 18 or more to 40 or less. Further, more preferably, the number of carbon atoms in the long-chain fatty acid is 20 or more and 26 or less, and the number of carbon atoms in the alcohol is 20 or more and 36 or less. In addition, particularly preferably, the number of carbon atoms in the long-chain fatty acid is 24 or more and 26 or less, and the number of carbon atoms in the alcohol is 24 or more and 32 or less. Further, particularly preferably, the number of carbon atoms in the long-chain fatty acid is 24, and the number of carbon atoms in the alcohol is 30. That is, the long-chain fatty acid ester is particularly preferably myricyl lignocerate.

When the number of carbon atoms in the long-chain fatty acid and the number of carbon atoms in the alcohol are within the above ranges, an effect that temporal stability of a core body is improved is obtained.

The content of the long-chain fatty acid ester contained in the solid writing body of the present embodiment is preferably 5% by mass or more and 80% by mass or less, more preferably 10% by mass or more and 60% by mass or less, and still more preferably 15% by mass or more and 50% by mass or less based on the total amount of the solid writing body.

When the content of the long-chain fatty acid ester contained in the solid writing body is in the above range, an effect of improving the color developability of the handwriting and the temporal stability of the core body is obtained.

Incidentally, when myricyl lignocerate is used as the long-chain fatty acid ester used in the solid writing body, a content of the myricyl lignocerate is preferably 30% by mass or more, and particularly preferably 35% by mass or more based on the total amount of the long-chain fatty acid ester.

When the content of myricyl lignocerate contained in the long-chain fatty acid ester is within the above range, the effect of improving the color developability of the handwriting and the temporal stability of the core body is obtained.

### (Other Waxes)

The solid writing body of the present embodiment may further contain a wax other than the long-chain fatty acid ester. For example, the solid writing body of the present embodiment may further contain a wax such as polyethylene wax, polypropylene wax, hydrogenated castor oil, 12-hydroxystearic acid, or fatty acid ester wax. Specific examples of the hydrogenated castor oil include trade name "Himashi Koka-yu A" manufactured by Itoh Oil Chemicals Co., Ltd. Examples of the fatty acid ester wax include trade names "WEP-5", "WEP-6", "WEP-8", and "WE-21" manufactured by NOF CORPORATION.

### (Ratio of Content between Leuco Dye and Long-Chain Fatty Acid Ester)

The ratio of the content of the leuco dye and the long-chain fatty acid ester contained in the solid writing body of the present embodiment is preferably in the range of 1:2 to 1:800, more preferably in the range of 1:2 to 1:200, still more preferably in the range of 1:5 to 1:200, and particularly preferably in the range of 1:10 to 1:100 in terms of a mass ratio (content of leuco dye:content of long-chain fatty acid ester).

When the ratio of the content of the leuco dye and the long-chain fatty acid ester is within the above range, it is possible to effectively achieve both improvement in the color developability of the handwriting and improvement in the temporal stability of the solid writing body, achievement of sufficient strength required for writing, and improvement in heat resistance.

### (Method for Manufacturing Solid Writing Body)

The solid writing body of the present embodiment is prepared by taking a predetermined amount of a solvent and a wax containing a long-chain fatty acid ester, and heating them to a dissolution temperature of the wax (for example, 80°C to 100°C) to obtain a solution in which the wax is dissolved. Then, a predetermined amount of the leuco dye is further taken and added to a solution of the wax to dissolve the leuco dye. Further, after stirring for a predetermined time, the solid writing body is manufactured by molding.

### (Application)

The solid writing body of the present embodiment is used as a crayon, a Cray-Pas, or the like.

The leuco dye contained in the solid writing body develops a color when the solid writing body is used for writing on the medium to which the color developer is applied, and the handwriting by the writing develops a color tone different from that of the solid writing body.

As the color developer, a substance that functions as a known electron acceptor capable of causing the leuco dye to develop color by being brought into contact with the leuco dye, which is a dye having electron-donating properties, may be used.

As the color developer, for example, phenols, organic acids, inorganic acids, or esters and salts thereof can be used.

### [Examples]

Hereinafter, the present invention will be specifically described with reference to Examples. However, the present invention is not limited to the following Examples.

### (Examples 1 to 13 and Comparative Examples 1 to 5)

The materials shown in the table as the leuco dye, the solvent, and the wax were set to the contents shown in the table, and the solid writing bodies of Examples and the comparative solid writing bodies of Comparative Examples were produced. Note that the content of each material shown in the table represents the content based on the total amount of the solid writing body or the comparative solid writing body in % by mass.

As a manufacturing method, a solvent and a wax were taken in blending amounts shown in a table and heated to a dissolution temperature of the wax (for example, 80°C to 100°C) to obtain a solution in which the wax is dissolved. Then, the leuco dye was further taken in a blending amount shown in the table and added to a solution of the wax to dissolve the leuco dye. Furthermore, after stirring for 30 minutes and then molding, a cylindrical solid writing body and a comparative solid writing body having a diameter of 10 mm and a length of 80 mm were produced.

In addition, in TOWAX-3F17 (manufactured by TOA KASEI CO.,LTD.) shown in the table, the number of carbon atoms in the fatty acid is 22 to 24, and the number of carbon atoms in the alcohol is 24 to 34. TOWAX-3F17 (manufactured by TOA KASEI CO.,LTD.) contains 35% by mass of myricyl lignocerate. In addition, in UNISTER ML2222SL (behenyl behenate) shown in the table, the number of carbon atoms in the fatty acid is 22, and the number of carbon atoms in the alcohol is 22.

### (Evaluation)

The produced solid writing bodies of Examples and the comparative solid writing bodies of Comparative Examples was each evaluated as follows. In the evaluation criteria, "○" indicates the best evaluation result, "△" indicates an intermediate evaluation result between "○" and "×", and "× " indicates the worst evaluation result.

### (Evaluation of Solid Writing Body Color)

The colors of the solid writing body and the comparative solid writing body were visually observed, and the solid writing body color was evaluated according to the following evaluation criteria. The evaluation results are shown in the table.

Evaluation criteria for solid writing body color
○: The color of the leuco dye cannot be confirmed.
△: The slight color of the leuco dye is observed.
×: The color of the leuco dye is prominently observed.

### (Evaluation of Strength of Solid Writing Body)

As the strength of the solid writing body and the comparative solid writing body, the bending strength measured using the method defined in "7.5 Bending Strength Test" of JIS S 6026 (Crayon and Cray-Pas) was measured as the strength of the solid writing body. Note that EZ-SX manufactured by Shimadzu Corporation was used as a measuring machine, and the solid writing body was stored in an environment at 37°C for one hour or more, and then immediately subjected to three-point bending strength measurement.

The standard value of a solid writing body is that the solid writing body does not break under a load of 4 N at a diameter of 8 mm or more. For this reason, when the measurement result of the bending strength was 0.78 MPa or more, the evaluation result was regarded as satisfying the standard and regarded as "○", and when the measurement result was less than 0.78 MPa, the evaluation result was regarded as not satisfying the standard and regarded as "× ". The evaluation results are shown in the table.

### (Evaluation of Heat Resistance)

After the solid writing body and the comparative solid writing body were left in an environment of 60°C for one hour, characters were written on a recording medium (pressure sensitive recording paper, manufactured by Nippon Paper Industries Co., Ltd., trade name: CCP Ace) coated with a color developer, and heat resistance was evaluated according to the following evaluation criteria.

### Evaluation criteria for heat resistance

○: Writing can be performed without problems.
△: Softening occurs and writing is difficult.
×: Dissolution occurs and writing cannot be performed.

### (Evaluation of Color Developability)

Using the solid writing body and the comparative solid body, characters were written on a recording medium (pressure sensitive recording paper, manufactured by Nippon Paper Industries Co., Ltd., trade name: CPP Ace), and the color developability of the handwriting was evaluated according to the following evaluation criteria.

### Evaluation criteria for color developability

○: The color of the leuco dye is clear.
△: The color of the leuco dye is observed, but color development is slightly weak.
×: The color of the leuco dye cannot be confirmed.

### (Evaluation of Color Development Rate)

Using the solid writing body and the comparative solid body, characters were written on a recording medium (pressure sensitive recording paper, manufactured by Nippon Paper Industries Co., Ltd., trade name: CCP Ace), and the color development rate of the handwriting was evaluated according to the following evaluation criteria.

### Evaluation criteria for color development rate

○: Color develops within one second after writing.
△: Color development takes one second or more after writing.
×: No color develops.

### (Evaluation of Temporal Stability)

The solid writing bodies and the comparative solid body were stored for three months each in an environment of room temperature (25°C) and 50°C. Then, for the solid writing body and the comparative solid body in each state before and after storage in each of the environments of room temperature and 50°C, characters were written on a recording medium (pressure sensitive recording paper, manufactured by Nippon Paper Industries Co., Ltd., trade name: CCP Ace), and the temporal stability was evaluated according to the following evaluation criteria using the color development of the handwriting.

### Evaluation criteria for temporal stability

○: There is almost no change in color development of the handwriting before and after storage.
△: The color development of the handwriting after storage is weaker than before storage, or the color development takes one second or more after writing after storage.
×: No color develops after storage.

**Table 1**

| Solid writing body | | | Example 1 | Example 2 | Example 3 | Example 4 | Example 5 | Example 6 | Example 7 |
|---|---|---|---|---|---|---|---|---|---|
| Leuco dye | Blue203 | Yamada Chemical Co., Ltd. | 1.00 | 1.00 | 1.00 | 1.00 | 1.00 | 1.00 | 1.00 |
| Solvent | EXCEPARL ML-85 (methyl laurate) | Kao Corporation | 29.00 | - | - | - | - | - | - |
| | EXCEPARL M-OL (methyl oleate) | Kao Corporation | - | 29.00 | 29.00 | - | - | - | - |
| | EXCEPARL IPM (isopropyl myristate) | Kao Corporation | - | - | - | 29.00 | - | - | - |
| | COCONAD RK (Caprylic/Capric Triglyceride) | Kao Corporation | - | - | - | - | 29.00 | - | - |
| | RIC-CIZER C-88 | Itoh Oil Chemicals Co., Ltd. | - | - | - | - | - | 29.00 | |
| | RIC-CIZER S-4 | Itoh Oil Chemicals Co., Ltd. | - | - | - | - | - | - | 29.00 |
| | Dihydroterpinyl acetate | Nihon Terpene Chemicals, Inc. | | | | | | | |
| | Isobornyl acetate | Nihon Terpene Chemicals, Inc. | | | | | | | |
| Wax (long-chain fatty acid ester) | TOWAX-3F17 (rice wax) | TOA KASEI CO.,LTD. | 70.00 | - | 70.00 | 70.00 | 30.00 | 30.00 | 30.00 |
| | UNISTER ML2222SL (behenyl behenate) | NOF Corporation | - | 70.00 | - | - | - | - | - |
| Other wax | Polywax 400 (polyethylene wax) | Toyochem Co., Ltd. | - | - | - | - | 40.00 | - | - |
| | Hydrogenated Castor oil A | Itoh Oil Chemicals Co., Ltd. | - | - | - | - | - | 40.00 | 40.00 |
| Total | | | 100.00 | 100.00 | 100.00 | 100.00 | 100.00 | 100.00 | 100.00 |
| Evaluation | Solid writing body color | | ○ | ○ | ○ | ○ | ○ | ○ | ○ |
| | Strength | | 2.54 MPa | 2.11 MPa | 2.72 MPa | 2.64 MPa | 2.99 MPa | 2.63 MPa | 2.51 MPa |
| | | | O | ○ | ○ | ○ | ○ | O | ○ |
| | Heat resistance | | ○ | ○ | ○ | ○ | O | ○ | ○ |
| | Color developability | | ○ | ○ | ○ | ○ | ○ | ○ | ○ |
| | Color development rate | | ○ | ○ | ○ | ○ | ○ | ○ | ○ |
| | Temporal stability | | ○ | ○ | ○ | ○ | ○ | ○ | ○ |

**Table 2**

| Solid writing body Example 8 Example 9 Example 10 Example 11 Example 12 Example 13 | | | | | | | | |
|---|---|---|---|---|---|---|---|---|
| Leuco dye | Blue203 | Yamada Chemical Co., Ltd. | 1.00 | 1.00 | 1.00 | 0.50 | 3.00 | 0.30 |
| Solvent | EXCEPARL ML-85 (methyl laurate) | Kao Corporation | - | - | 29.00 | 19.50 | - | - |
| | EXCEPARL M-OL (methyl oleate) | Kao Corporation | - | - | - | - | - | - |
| | EXCEPARL IPM (isopropyl myristate) | Kao Corporation | - | - | - | - | 42.00 | 24.70 |
| | COCONAD RK (Caprylic/Capric Triglyceride) | Kao Corporation | - | - | - | - | - | - |
| | RIC-CIZER C-88 | Itoh Oil Chemicals Co., Ltd. | - | - | - | - | - | - |
| | RIC-CIZER S-4 | Itoh Oil Chemicals Co., Ltd. | - | - | - | - | - | - |
| | Dihydroterpinyl acetate | Nihon Terpene Chemicals, Inc. | 29.00 | - | - | - | - | - |
| | Isobornyl acetate | Nihon Terpene Chemicals, Inc. | - | 29.00 | - | - | - | - |
| Wax (long-chain fatty acid ester) | TOWAX-3F17 (rice wax) | TOA KASEI CO.,LTD. | 50.00 | 20.00 | 15.00 | 75.00 | 5.00 | 35.00 |
| | UNISTER ML2222SL (behenyl behenate) | NOF Corporation | - | - | - | - | - | - |
| Other wax | Polywax 400 (polyethylene wax) | Toyochem Co., Ltd. | 20.00 | 50.00 | - | - | - | - |
| | Hydrogenated Castor oil A | Itoh Oil Chemicals Co., Ltd. | - | - | 55.00 | 5.00 | 50.00 | 40.00 |
| Total | | | 100.00 | 100.00 | 100.00 | 100.00 | 100.00 | 100.00 |
| Evaluation | Solid writing body color | | ○ | ○ | ○ | ○ | ○ | ○ |
| | Strength | | 2.77 MPa | 3.08 MPa | 2.77 MPa | 3.08 MPa | 2.98 MPa | 2.71 MPa |
| | | | ○ | ○ | ○ | ○ | ○ | ○ |
| | Heat resistance | | ○ | ○ | ○ | ○ | ○ | ○ |
| | Color developability | | ○ | ○ | ○ | ○ | ○ | ○ |
| | Color development rate | | ○ | ○ | ○ | ○ | ○ | ○ |
| | Temporal stability | | ○ | ○ | ○ | ○ | △ | ○ |

**Table 3**

| Comparative solid writing body | | | Comparative Example 1 | Comparative Example 2 | Comparative Example 3 | Comparative Example 4 | Comparative Example 5 |
|---|---|---|---|---|---|---|---|
| Leuco dye | Blue203 | Yamada Chemical Co., Ltd. | 1.00 | 1.00 | 1.00 | 1.00 | 1.00 |
| Solvent | EXCEPARL ML-85 (methyl laurate) | Kao Corporation | 29.00 | 29.00 | 29.00 | 29.00 | 29.00 |
| | RIC-CIZER S-4 | Itoh Oil Chemicals Co., Ltd. | - | - | - | - | - |
| | RIC-CIZER C-88 | Itoh Oil Chemicals Co., Ltd. | - | - | - | - | - |
| Other wax | Hydrogenated Castor Oil A | Itoh Oil Chemicals Co., Ltd. | 70.00 | - | - | - | - |
| | 12-hydroxystearic acid | Itoh Oil Chemicals Co., Ltd. | - | 70.00 | - | - | - |
| | KALCOL 220-80 (behenyl alcohol) | Kao Corporation | - | - | 70.00 | - | - |
| | KALCOL 8098 (stearyl alcohol) | Kao Corporation | - | - | - | 70.00 | - |
| | Fatty acid amide S (stearic acid amide) | Kao Corporation | - | - | - | - | 70.00 |
| Total | | | 100.00 | 100.00 | 100.00 | 100.00 | 100.00 |
| Evaluation | Solid writing body color | | △ | △ | △ | △ | ○ |
| | Strength | | 2.44 MPa | 1.98 MPa | 2.91 MPa | 2.06 MPa | 0.98 MPa |
| | | | ○ | ○ | ○ | ○ | ○ |
| | Heat resistance | | ○ | ○ | △ | × | △ |
| | Color developability | | △ | △ | △ | △ | △ |
| | Color development rate | | △ | △ | ○ | ○ | △ |
| | Temporal stability | | O | △ | △ | △ | △ |

As illustrated in Tables 1 to 3, it has been confirmed that the solid writing body of the example can achieve both the improvement in the color developability of the writing and the improvement in the temporal stability of the solid writing body as compared with the comparative solid writing body. In addition, it has been confirmed that the solid writing body of the example has better results in all of the solid writing body color, strength, heat resistance, and color development rate than the comparative solid body.

### INDUSTRIAL APPLICABILITY

The solid writing body according to the present invention can be used as a crayon or a Cray-Pas.

## Claims

1. A solid writing body comprising: a leuco dye; a long-chain fatty acid ester; and a solvent capable of dissolving or dispersing the leuco dye.

2. The solid writing body according to claim 1, wherein
the long-chain fatty acid ester is an ester of a long-chain fatty acid and an alcohol,
a number of carbon atoms in the long-chain fatty acid is 18 or more and 40 or less, and
a number of carbon atoms in the alcohol is 18 or more and 40 or less.

3. The solid writing body according to claim 1, wherein
the long-chain fatty acid ester is an ester of a long-chain fatty acid and an alcohol,
a number of carbon atoms in the long-chain fatty acid is 20 or more and 26 or less, and
a number of carbon atoms in the alcohol is 20 or more and 36 or less.

4. The solid writing body according to claim 1, wherein
the long-chain fatty acid ester is an ester of a long-chain fatty acid and an alcohol, and
is myricyl lignocerate in which a number of carbon atoms in the long-chain fatty acid is 24 and a number of carbon atoms in the alcohol is 30.

5. The solid writing body according to claim 1, wherein
a content of the long-chain fatty acid ester is 5% by mass or more and 80% by mass or less based on a total amount of the solid writing body.

6. The solid writing body according to claim 1, wherein
the long-chain fatty acid ester includes myricyl lignocerate in which a number of carbon atoms in the long-chain fatty acid is 24 and a number of carbon atoms in the alcohol is 30, and
a content of the myricyl lignocerate is 30% by mass or more based on a total amount of the long-chain fatty acid ester.

7. The solid writing body according to claim 1, wherein
the long-chain fatty acid ester includes myricyl lignocerate in which a number of carbon atoms in the long-chain fatty acid is 24 and a number of carbon atoms in the alcohol is 30, and
a content of the myricyl lignocerate is 35% by mass or more based on a total amount of the long-chain fatty acid ester.

8. The solid writing body according to claim 1, wherein
a ratio of a content of the leuco dye to a content of the long-chain fatty acid ester is in a range of 1:2 to 1:800, inclusive, in terms of mass ratio.
